# EUROPÄISCHE PATENTSCHRIFT

(11) **EP 2 975 745 B1**
(45) Veröffentlichungstag und Bekanntmachung des Hinweises auf die Patenterteilung: **05.12.2018**
(21) Anmeldenummer: 15175457.9
(22) Anmeldetag: 06.07.2015
(51) Int. Cl.: H02K 13/00, H02K 13/04, H02K 23/62

(54) **GLEICHSTROMMOTOR**
DIRECT CURRENT MOTOR
MOTEUR A COURANT CONTINU

(30) Priorität: 11.07.2014 DE 102014010251
(43) Veröffentlichungstag der Anmeldung: 20.01.2016
(73) Patentinhaber: Sieva D.O.O. - Poslovna Enota Idrija, 5280 Idrija (SI)
(72) Erfinder: KUMAR, Ludvik, 1371 Logatec (SI); LIKAR, Andrej, 5282 Cerkno (SI)
(74) Vertreter: Grättinger Möhring von Poschinger Patentanwälte Partnerschaft

(56) Entgegenhaltungen:
- EP-A1- 1 796 250
- WO-A1-01/37405
- WO-A1-2005/036717
- JP-A- S60 162 463

## Beschreibung

Die vorliegende Erfindung betrifft einen Gleichstrommotor mit mechanischer Kommutierung, umfassend einen Stator und einen relativ zu diesem um eine Achse drehbar gelagerten Rotor, wobei der Rotor eine Abfolge von Permanentmagneten umfasst und der Stator eine Mehrzahl von den Permanentmagneten gegenüberliegend angeordneten Erregerwicklungen aufweist, wobei weiterhin ein mit dem Rotor gekoppelter Kommutator vorgesehen ist, dessen Kommutatorsegmente über mehrere Schleifringeinheiten leitend mit den Erregerwicklungen verbunden sind.

Mit Gleichstrom betriebene Elektromotoren (Gleichstrommotoren) werden in einer großen Bandbreite von Anwendungen eingesetzt. Die Auswahl der geeigneten Motorbauweise richtet sich dabei nach den spezifischen, sich aus der jeweiligen Anwendung heraus ergebenden Anforderungen. Neben den typischen Kriterien (Drehmoment, Leistung, Gleichlaufverhalten, Baugröße, Kosten, Zuverlässigkeit, Lebensdauer und dergleichen) kommen bei besonderen Anwendungen weitere Gesichtspunkte (z.B. die Wärmeabfuhr) für die Auswahl des jeweils geeigneten Gleichstrommotors zum Tragen. In diesem Sinne kann es bei bestimmten Anwendungen entscheidend darauf ankommen, dass die entstehende Dissipationswärme möglichst effizient an die Umgebung abgegeben wird, um eine Überhitzung des Motors zu verhindern.

In dieser Hinsicht haben sich Gleichstrommotoren der eingangs angegebenen, gattungsgemäßen Art, wie sie beispielsweise aus der WO 2007/122767 A1 samt Parallelveröffentlichungen US 7728479 B2 und DE 112006003837 T5 sowie der US 6396175 B2 bekannt sind, grundsätzlich bewährt. Denn bei ihnen entstehen auf bzw. an dem Rotor nahezu keinerlei Verluste, so dass auch die Dissipationswärme nicht im Rotor entsteht. Vielmehr entsteht bei dieser Motorbauweise Dissipationswärme nahezu ausschließlich im Stator, von wo die Wärme vergleichsweise leicht an die Umgebung abgegeben werden kann. Vor diesem Hintergrund kommen Gleichstrommotoren der gattungsgemäßen Art beispielhaft insbesondere im Zusammenhang mit Turboladern zum Einsatz, wo die Wärmeabfuhr ein nennenswertes Problem darstellt bzw. die Beherrschung wärmebedingter Gesichtspunkte für die Funktion und Lebensdauer entscheidend ist. Indem mindestens einer der Schleifringe der Schleifringeinheiten eine im Wesentlichen ebene Schleifkontaktlauffläche aufweist, ist bei der betreffenden Schleifringeinheit der zugeordnete Schleifkontakt im Wesentlichen axial gegen die Schleikontaktlauffläche vorgespannt.

Aus der WO 2005/036717 A1 ist ein Gleichstrommotor bekannt, der sich von dem gattungsgemäßen Motorkonzept insbesondere dadurch unterscheidet, dass hier der Kommutator Teil des Stators ist. Die Kommutatorsegmente sind direkt mit den Erregerwicklungen verbunden. Die dem Kommutator zugeordneten Bürsten sind demgegenüber in dem Rotor gelagert. Sie werden über Schleifringeinheiten (mit zylindrischen Schleifkontaktlaufflächen) mit Gleichstrom versorgt. Der (stationäre) Kommutator ist als Hohlkommutator ausgeführt, bei dem die Bürsten innerhalb des von der Bürstenlauffläche umschlossenen Raumes angeordnet sind. Ein im Wesentlichen gleiches Motorkonzept ist auch aus der JP 60-162463 A bekannt.

Die vorliegende Erfindung ist darauf gerichtet, einen Gleichstrommotor der eingangs angegebenen, gattungsgemäßen Art bereitzustellen, der besonders kompakt und zudem vergleichsweise einfach herstellbar ist und sich zudem durch eine hohe Lebensdauer auszeichnet.

Gelöst wird die vorstehende Aufgabenstellung durch einen Gleichstrommotor nach Anspruch 1. Gemäß der vorliegenden Erfindung ist der Kommutator als Hohlkommutator ausgeführt, bei dem die Bürsten innerhalb des von der Bürstenlauffläche umschlossenen Raumes angeordnet sind, und die Schleifringe der Schleifringeinheiten auf unterschiedlichen Seiten eines rotierenden scheibenförmigen Schleifringträgers angeordnet sind. Bei dem erfindungsgemäßen Gleichstrommotor ergibt sich, ohne dass dies nachteilige Auswirkungen auf den erforderlichen Bauraum hätte, die Möglichkeit, die Kommutatorsegmente vergleichsweise groß zu dimensionieren. Dementsprechend können auch die an der Bürstenlauffläche anliegenden Bürsten einen vergleichsweise großen Querschnitt aufweisen, was nicht nur wegen der möglichen Begrenzung der Stromflussdichten und dementsprechend der Verluste vorteilhaft ist, sondern auch zur Minimierung des Verschleißes der Bürsten beiträgt und somit der Lebensdauer des Gleichstrommotors entgegenkommt. Zudem lassen sich bei dem erfindungsgemäßen Gleichstrommotor, ohne dass dies zu größeren Abmessungen führen würde, vergleichsweise lange Bürsten (mit einem großen Verschleißmaß) einsetzen. Insoweit trägt die vorliegende Erfindung der besonderen Erkenntnis Rechnung, dass sich das Verschleißverhalten von Bürsten eines Kommutators einerseits und das von Schleifkontakten einer Schleifringeinheit andererseits substantiell voneinander unterscheiden. Die erfindungsgemäße Bauweise des Gleichstrommotors berücksichtigt dies durch die spezifische Anordnung und Ausführung des Kommutators als Hohlkommutator, bei dem die Bürsten innerhalb des von der Bürstenlauffläche umschlossenen Raumes angeordnet sind.

Dadurch, dass die Schleifringe der Schleifringeinheiten auf unterschiedlichen Seiten eines rotierenden scheibenförmigen Schleifringträgers angeordnet sind, ergeben sich mehrere weitere praxisrelevante Vorteile. Zum einen erfolgt auf diese Weise eine (zumindest teilweise) Kompensation der Anlagekräfte der Schleifkontakte an den zugeordneten Schleifkontaktlaufflächen der Schleifringeinheiten, so dass die Belastung der Rotorlager des Gleichstrommotors durch Axialkräfte reduziert wird. Weiterhin können die auf unterschiedlichen Seiten des Schleifringträgers angeordneten Schleifringe einander in radialer Richtung zumindest teilweise überlappen, wodurch sich an den verschiedenen Schleifringeinheiten im Wesentlichen übereinstimmende Geschwindigkeiten der Schleifringe relativ zu den Schleifkontakten ergeben, was sich wiederum vergleichmäßigend auf das Abriebverhalten der Schleifkontakte auswirkt. Als dritter relevanter Vorteil ist die Möglichkeit zu nennen, trotz relativ breiter Schleifringe, welche bei hohen Strömen geringe Stromflussdichten durch die Schleifkontakte ermöglichen, besonders kompakte Gleichstrommotoren zu konzipieren.

In besonders bevorzugter Ausgestaltung der Erfindung können sämtliche Schleifringeinheiten (z.B. alle drei Schleifringeinheiten eines Dreiphasen-Gleichstrommotors) eine in dem weiter oben dargelegten Sinne im Wesentlichen ebene Schleifkontaktlauffläche aufweisen.

Zu einer besonders kompakten Bauweise des Gleichstrommotors nach der vorliegenden Erfindung trägt dabei weiterhin bei, wenn einer der Schleifringe der Schleifringeinheiten in radialer Richtung die Bürstenlauffläche des Kommutators überlappt, so dass, mit anderen Worten, die Bürstenlauffläche des Kommutators einen Durchmesser aufweist, auf welchem sich auch die Schleifkontaktlauffläche einer Schleifringeinheit befindet. Hierdurch lässt sich der zur Verfügung stehende Bauraum optimal nutzen.

In herstellungstechnischer Hinsicht ist es besonders günstig, wenn ein hülsenförmiger Segmentträger für die Kommutatorsegmente an einem Schleifringträger, wie er vorstehend erläutert wurde, angeformt ist. Bei dieser Weiterbildung umfasst der Rotor, mit anderen Worten, ein einheitliches Bauteil mit einem Abschnitt (Schleifringträger), an welchem die Schleifringe angeordnet sind, und einem weiteren Abschnitt (Segmentträger), an welchem die Kommutatorsegmente angeordnet sind. In jenes (beispielsweise durch Spritzgießen hergestelltes) kombinierte Bauteil sind dabei besonders bevorzugt die Verbindungen der Schleifringe mit den Kommutatorsegmenten eingebettet.

Eine andere bevorzugte Weiterbildung der vorliegenden Erfindung zeichnet sich dadurch aus, dass der Motor ein topf- bzw. büchsenförmiges Gehäuse mit einem Gehäusemantel und einem Gehäuseboden aufweist. Diese besondere Bauweise der vorliegenden Erfindung lässt dabei zu, dass der Gehäuseboden einstückig an dem Gehäusemantel angeformt und/oder vollständig geschlossen ausgeführt sein kann. Letzteres ist insbesondere ein entscheidender Vorteil beim Einsatz des Gleichstrommotors in einer Umgebung, wo mit Schmutzpartikeln zu rechnen ist. Im Hinblick auf eine optimale Wärmeabfuhr (siehe oben) besteht das topfförmige Gehäuse in bevorzugter Weise aus Aluminium, wobei aufgrund des hervorragenden Wärmeleitverhaltens von Aluminium und der einstückigen Bauweise des Gehäuses auch der Gehäuseboden für eine besonders wirksame Abfuhr der in dem Stator entstehenden Dissipationswärme an die Umgebung genutzt werden kann.

Namentlich dann, wenn das Gehäuse des Motors in dem vorstehend dargelegten Sinne topfförmig ausgeführt ist, ist in diesem bevorzugt nahe dem Gehäuseboden ein kombinierter Rotorlager- und Bürstenträger angeordnet. Aufgrund seiner Funktion besteht der Rotorlager- und Bürstenträger besonders bevorzugt aus einem isolierenden Material (z.B. Kunststoff). Die Bürsten können dabei einander mehr oder weniger diametral gegenüberliegend angeordnet sein, so dass sich die Anlagekräfte der Bürsten an der Kommutatorlauffläche vollständig bzw. zumindest im Wesentlichen aufheben. Dies entlastet das zugeordnete Rotorlager. Besonders vorteilhaft ist im Übrigen, wenn die Bürsten näher am Gehäuseboden angeordnet sind als das Rotorlager; denn in diesem Falle können besonders lange, ein hohes Verschleißmaß aufweisende Bürsten zum Einsatz kommen, was der Lebensdauer des Gleichstrommotors entgegenkommt.

Ebenfalls unter thermischen Gesichtspunkten ist von Vorteil, wenn die Permanentmagnete des Rotors des erfindungsgemäßen Gleichstrommotors als Ferrit-Magnete oder Plastomagnete ausgeführt sind. Denn aufgrund des hohen spezifischen Widerstands dieses Materials sind die induzierten Verlustströme vergleichsweise gering, so dass die im Rotor entstehende Verlustwärme entsprechend gering ist. Im Übrigen muss, im Rahmen der vorliegenden Erfindung, die Abfolge von Permanentmagneten des Rotors mitnichten aus Einzelmagneten bestehen; im Gegenteil ist günstig, wenn die Abfolge von Permanentmagneten gebildet ist durch eine Abfolge von Polarisierungen (z.B. vier Pole), die an einem Ringelement mittels Magnetisierung erzeugt sind. Dabei kann im Sinne der vorstehenden Erläuterungen insbesondere ein Plasto- oder Ferritmagnet-Ringelement zum Einsatz kommen. Dieses ist vorteilhafterweise auf einem Kern aus weichmagnetischem Material aufgesetzt.

Weiterhin ist besonders vorteilhaft, wenn an dem Rotorlager- und Bürstenträger mindestens ein (mit einem zugeordneten Schleifring in Kontakt stehender) Schleifkontakt angeordnet ist. Bei dreiphasigen Gleichstrommotoren ist idealerweise genau ein Schleifkontakt an dem Rotorlager- und Bürstenträger angeordnet, wohingegen zwei Schleifkontakte an einem separaten Schleifkontaktträger angeordnet sind, wobei sich ein an beiden axialen Stirnseiten mit Schleifringen bestückter Schleifringträger (siehe oben) zwischen dem Rotorlager- und Bürstenträger einerseits und dem Schleifkontaktträger andererseits befindet. Der Schleifkontaktträger kann dabei darüber hinaus - insbesondere über eingebettete Leiter bzw. Leitungselemente - zwei weitere Funktionen übernehmen, nämlich einerseits die Verbindung der Anschlusskontakte des Gleichstrommotors mit den Bürsten des Kommutators und andererseits die Verbindung des an dem Rotorlager- und Bürstenträger angeordneten Schleifkontakts mit der Statorwicklung. Der vorstehend erläuterte Schleifkontaktträger ist bevorzugt in axialer Richtung zwischen einem Schleifringträger (siehe oben) und den Erregerwicklungen des Stators angeordnet.

Das Gehäuse des Gleichstrommotors ist, gemäß einer anderen bevorzugten Weiterbildung der Erfindung, durch einen Gehäusedeckel geschlossen, in welchem ein Rotorlager aufgenommen ist. An dem Gehäusedeckel können dabei insbesondere die Anschlusskontakte für die Versorgung des Motors mit Spannung angebracht sein. In diesem Falle besteht der Gehäusedeckel bevorzugt aus einem isolierenden Material (z.B. Kunststoff).

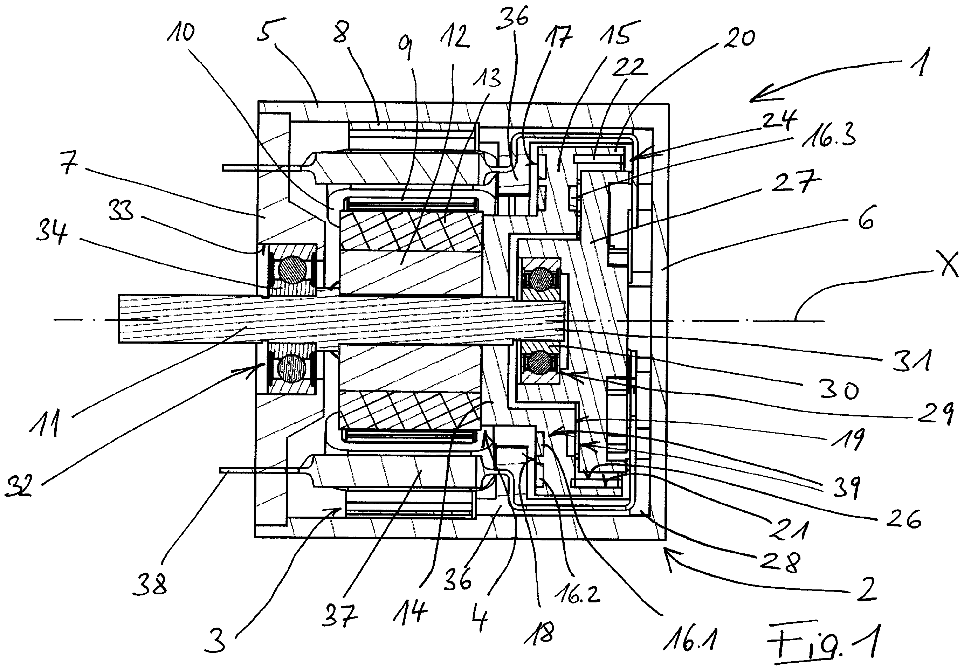

Im Folgenden wird die vorliegende Erfindung anhand eines in der Zeichnung veranschaulichten bevorzugten Ausführungsbeispiels näher erläutert. Dabei zeigt
- Fig. 1: einen Axialschnitt durch den erfindungsgemäßen Gleichstrommotor gemäß diesem Ausführungsbeispiel,

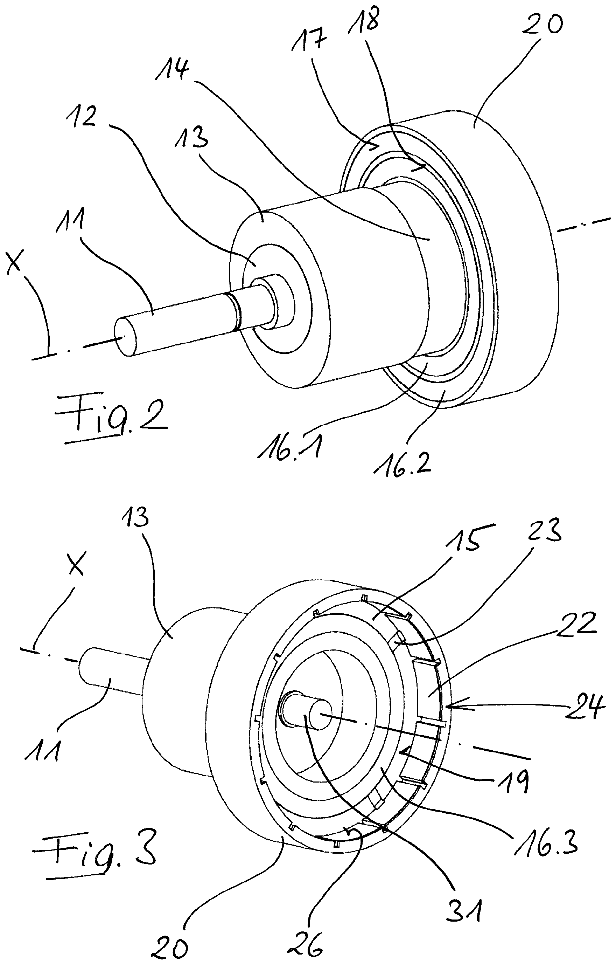

- Fig. 2: den Rotor des Motors in einer ersten und
- Fig. 3: den Rotor des Motors in einer zweiten Ansicht,

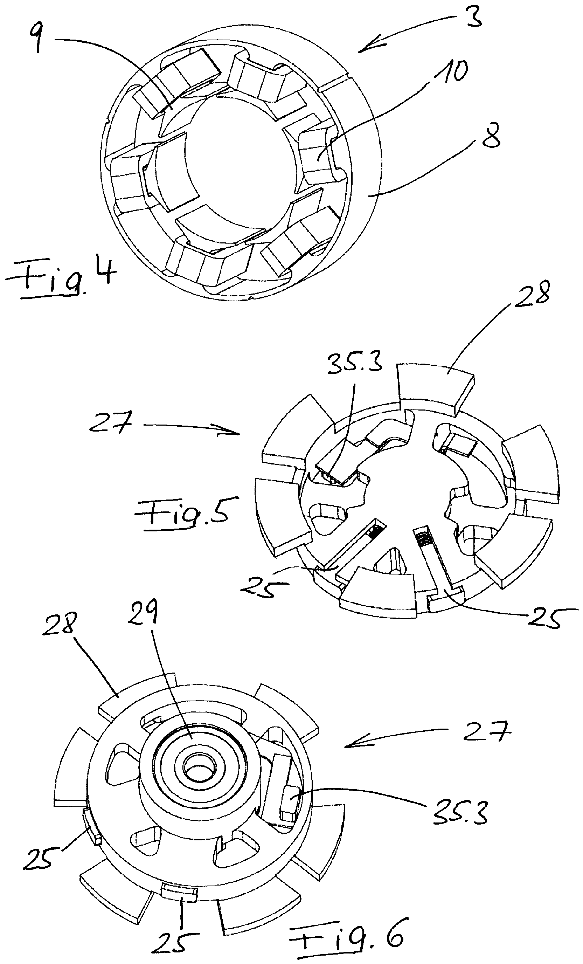

- Fig. 4: den Stator in perspektivischer Ansicht,
- Fig. 5: den Rotorlager- und Bürstenträger in einer ersten und
- Fig. 6: den Rotorlager- und Bürstenträger in einer zweiten perspektivischen Ansicht,

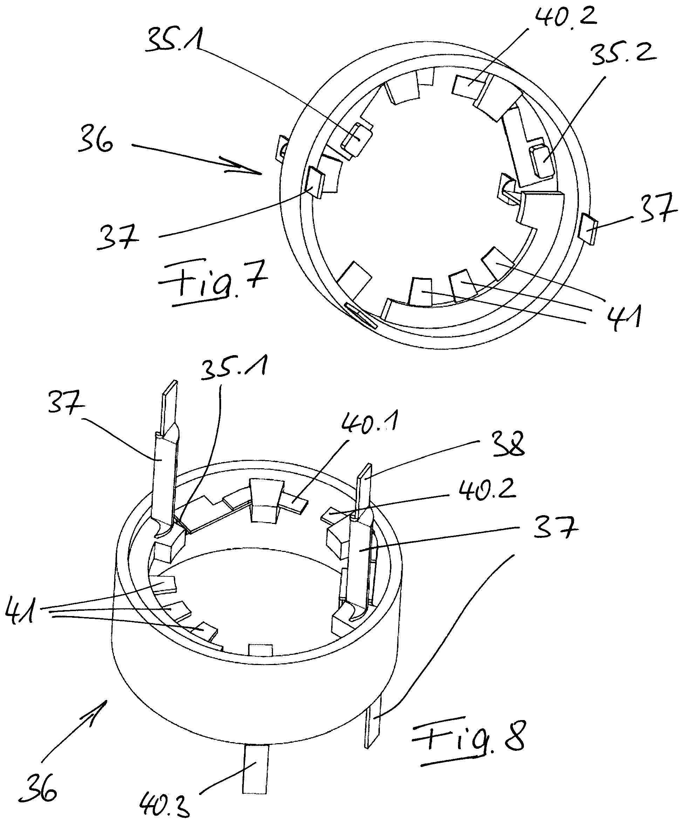

- Fig. 7: den Schleifkontaktträger in einer ersten und
- Fig. 8: den Schleifkontaktträger in einer zweiten perspektivischen Ansicht und
- Fig. 9: in fünf Stufen die Montage des in den Figuren 1 bis 8 gezeigten Motors.

Der in der Zeichnung veranschaulichte dreiphasige Gleichstrommotor 1 mit mechanischer Kommutierung umfasst ein Gehäuse 2 mit einem darin lagefest angeordneten Stator 3 und einen Rotor 4, der relativ zu dem Stator 3 um die Achse X drehbar gelagert ist.

Das aus Aluminium bestehende Gehäuse 2 ist topfförmig bzw. büchsenförmig ausgeführt mit einem im Wesentlichen zylindrischen Gehäusemantel 5 und einem einstückig an diesem angeformten Gehäuseboden 6. Der Gehäuseboden 6 ist dabei im Wesentlichen eben und vollständig geschlossen. Gegenüber dem Gehäuseboden 6 ist das Gehäuse 2 mittels eines aus Kunststoff bestehenden Gehäusedeckels 7 verschlossen.

Der Stator 3 umfasst einen Wicklungsträger 8, an welchem sechs dem Rotor 4 gegenüberstehende Pole 9 ausgeführt sind, und sechs auf dem Wicklungsträger 8 ausgeführte Erregerwicklungen 10.

Der Rotor 4 umfasst eine Welle 11, einen lagefest mit dieser verbundenen, aus weichmagnetischem Material bestehenden zylindrischen Kern 12, an dessen Außenumfang - durch entsprechende Magnetisierung eines Plasto- oder Ferritmagnet-Ringelements 13 hergestellt - eine Mehrzahl von Permanentmagneten in einer Abfolge mit alternierender Polarität angeordnet ist, und einen ebenfalls lagefest mit der Welle 11 verbundenen, aus Kunststoff bestehenden Schleifringträger 14. Der Schleifringträger weist einen im Wesentlichen ebenen, scheibenförmigen Abschnitt 15 auf, an welchem drei ebene Schleifringe 16, d.h. Schleifringe mit jeweils ebener Schleifkontaktlauffläche 17 angeordnet sind. Ein erster Schleifring 16.1 und ein zweiter Schleifring 16.2 sind dabei an der dem Wicklungsträger 8 des Stators 3 zugewandten Stirnseite 18 des scheibenförmigen Abschnitts 15 des Schleifringträgers 14 angeordnet. Ein dritter ebener Schleifring 16.3 ist indessen auf der gegenüberliegenden Stirnseite 19 des scheibenförmigen Abschnitts 15 des Schleifringträgers 14 angeordnet. Der dritte Schleifring 16.3 und der erste Schleifring 16.1 überlappen dabei einander in radialer Richtung.

Der scheibenförmige Abschnitt 15 des Schleifringträgers 14 geht an seinem Außenumfang in einen einstückig daran angeformten hülsenförmigen Segmentträger 20 über, welcher sich in Richtung weg von dem Wicklungsträger 8 des Stators 3 erstreckt und an dessen Innenumfang 21 zwölf Kommutatorsegmente 22 angeordnet sind. Die Kommutatorsegmente 22 stehen über Verbindungslaschen 23 in sich wiederholender Abfolge mit dem ersten, dem zweiten bzw. dem dritten Schleifring 16.1, 16.2 bzw. 16.3 in Verbindung, wobei die entsprechenden Verbindungslaschen 23 in die Kunststoffmasse des kombinierten Schleifring- und Segmentträgers 14 eingebettet sind.

Der (mit dem Rotor gekoppelte) Kommutator 24 ist demgemäß als Hohlkommutator ausgeführt, bei dem die beiden Bürsten 25 innerhalb des von der Bürstenlauffläche 26 umschlossenen Raumes angeordnet sind. Der Kommutator 24 ist dabei so dimensioniert, dass der zweite Schleifring 16.2 und die Bürstenlauffläche 26 einander in radialer Richtung überlappen. Die Bürsten 25 sind in einem kombinierten Rotorlager- und Bürstenträger 27, welcher in dem Gehäuse 2 benachbart dem Gehäuseboden 6 angeordnet ist, im Wesentlich radial verschiebbar geführt und federbelastet nach außen zur Anlage an den Kommutatorsegmenten 22 vorgespannt. Der aus Kunststoff bestehende kombinierte Rotorlager- und Bürstenträger 27 weist an seinem Außenumfang mehrere Zentriervorsprünge 28 auf, welche durch Anlage innen an dem Gehäusemantel 5 für eine exakte Zentrierung des kombinierten Rotorlager- und Bürstenträgers in dem Gehäuse 2 sorgen.

In den kombinierten Rotorlager- und Bürstenträger 27 ist darüber hinaus ein erstes Rotorlager 29 eingesetzt, in dessen Innenring 30 ein zugeordneter Wellenstummel 31 der Rotorwelle 11 aufgenommen ist, wobei die Bürsten 25 näher am Gehäuseboden 6 angeordnet sind als das erste Rotorlager 29. Ein zweites Rotorlager 32 ist in einem zentralen Durchbruch 33 des Gehäusedeckels 7 aufgenommen. Der Innenring 34 dieses zweiten Rotorlagers 32 wird von der Rotorwelle 11 durchsetzt.

Ferner ist an dem Rotorlager- und Bürstenträger 27 ein Schleifkontakt 35.3 angeordnet, der mit dem dritten Schleifring 16.3 in Kontakt steht. Zwei weitere, mit dem ersten bzw. dem zweiten Schleifring 16.1 bzw. 16.2 in Kontakt stehende Schleifkontakte 35.1 und 35.2 sind an einem Schleifkontaktträger 36 angeordnet, welcher in axialer Richtung zwischen dem Schleifringträger 14 und dem Wicklungsträger 8 des Stators 3 positioniert ist. An die drei Schleifontakte 35.1, 35.2 und 35.3 sind über Verbindungsleiter 40 die Erregerwicklungen 10 angeschlossen.

Der Versorgung der Bürsten 25 des Kommutators 24 mit Gleichstrom dienen zwei Leitungselemente 37, welche sich, von am Gehäusedeckel 7 angeordneten Anschlüssen 38 ausgehend, in axialer Richtung durch den Wicklungsträger 8 sowie den Schleifkontaktträger 36 hindurch erstrecken. Die Stromführung des Motors erfolgt demnach nach dem folgenden Schema: Anschlüsse 38, Leitungselemente 37, Bürsten 25, Kommutatorsegmente 22, Schleifringeinheiten 39, d.h. Schleifringe 16 und Schleifkontakte 35, Verbindungsleiter 40, Erregerwicklungen 10. Die Erregerwicklungen 10 sind untereinander über einen an dem Schleifkontaktträger 36 angeordneten Verbinder 41 gekoppelt.

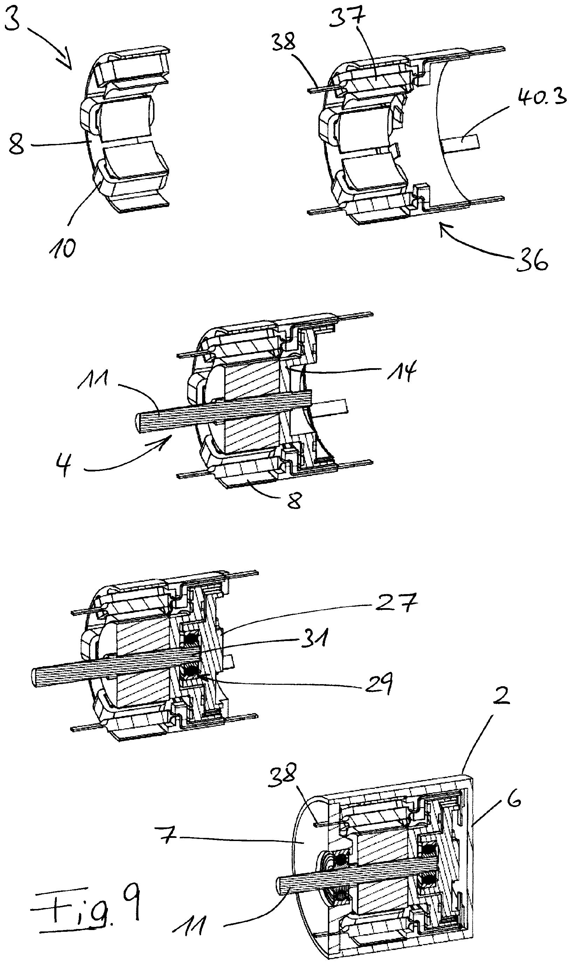

Nach Fig. 9 werden bei der Montage des Gleichstrommotors 1 zunächst der vorgefertigte Stator 3 (samt Erregerwicklungen 10) und der ebenfalls vorgefertigte Schleifkontaktträger (samt Leitungselementen 37, erstem und zweitem Schleifkontakt 35.1 und 35.2 und zugehörigen Verbindungsleitern 40.1 und 40.2 sowie dem Verbindungsleiter 40.3) zusammengefügt, wobei die Erregerwicklungen an die drei Verbindungsleiter 40 und den dreipoligen Verbinder 41 angeschlossen werden. Anschließend wird der vorgefertigte Rotor 4 (samt Schleifringträger 14 und daran angebrachten Schleifringen 16.1, 16.2 und 16.3 sowie an dem Segmentträger 20 angebrachten und mit den drei Schleifringen verbundenen Kommutatorsegmenten 22) eingesetzt. Sodann wird der kombinierte Rotorlager- und Bürstenträger 27 samt Bürsten 25, drittem Schleifkontakt 35.3 sowie eingesetztem erstem Rotorlager 29 auf dem Wellenstummel 31 aufgesetzt. Es folgt die Kontaktierung der Bürsten 25 mit den Leitungselementen 37 und des dritten Schleifkontakts 35.3 mit dem zugeordneten Verbindungsleiter 40.3. Die so montierte Gruppe wird - mit dem kombinierte Rotorlager- und Bürstenträger 27 voran - in das Gehäuse 2 eingesetzt. Abschließend wird das Gehäuse 2 mittels des Gehäusedeckels 7, in welchen das zweite Rotorlager 32 eingesetzt ist, verschlossen, wobei die Anschlüsse 38 durch den Gehäusedeckel 7 hindurch treten.

## Patentansprüche

1. Gleichstrommotor mit mechanischer Kommutierung, umfassend einen Stator (3) und einen relativ zu diesem um eine Achse (X) drehbar gelagerten Rotor (4), wobei der Rotor eine Abfolge von Permanentmagneten umfasst und der Stator eine Mehrzahl von den Permanentmagneten gegenüberliegend angeordneten Erregerwicklungen (10) aufweist, wobei weiterhin ein mit dem Rotor gekoppelter Kommutator (24) vorgesehen ist, dessen Kommutatorsegmente (22) über mehrere Schleifringeinheiten (39) leitend mit den Erregerwicklungen (10) verbunden sind, wobei mindestens einer der Schleifringe (16) der Schleifringeinheiten (39) eine im Wesentlichen ebene Schleifkontaktlauffläche (17) auf einem scheibenförmigen Abschnitt (15) eines rotierenden Schleifringträgers (14) aufweist, **dadurch gekennzeichnet,**
**dass** der Kommutator (24) als Hohlkommutator ausgeführt ist, bei dem die Bürsten (25) innerhalb des von der Bürstenlauffläche (26) umschlossenen Raumes angeordnet sind, und dass Schleifringe (16) der Schleifringeinheiten (39) auf unterschiedlichen Seiten eines scheibenförmigen Abschnitts (15) eines rotierenden Schleifringträgers (14) angeordnet sind.

2. Gleichstrommotor nach Anspruch 1, **dadurch gekennzeichnet, dass** einer der Schleifringe (16) der Schleifringeinheiten (39) in radialer Richtung die Bürstenlauffläche (26) überlappt.

3. Gleichstrommotor nach Anspruch 1 oder Anspruch 2, **dadurch gekennzeichnet, dass** die auf unterschiedlichen Seiten (18, 19) des Schleifringträgers (14) angeordneten Schleifringe (16) einander in radialer Richtung zumindest teilweise überlappen.

4. Gleichstrommotor nach einem der Ansprüche 1 bis 3, **dadurch gekennzeichnet, dass** ein hülsenförmiger Segmentträger (20) für die Kommutatorsegmente (22) an einen Schleifringträger (14) angeformt ist.

5. Gleichstrommotor nach einem der Ansprüche 1 bis 4, **dadurch gekennzeichnet, dass** der Motor (1) ein topf- bzw. büchsenförmiges Gehäuse (2) mit einem Gehäusemantel (5) und einem Gehäuseboden (6) aufweist.

6. Gleichstrommotor nach Anspruch 5, **dadurch gekennzeichnet, dass** der Gehäuseboden (6) einstückig an dem Gehäusemantel (5) angeformt ist.

7. Gleichstrommotor nach Anspruch 5 oder Anspruch 6, **dadurch gekennzeichnet, dass** der Gehäuseboden (6) vollständig geschlossen ist.

8. Gleichstrommotor nach einem der Ansprüche 5 bis 7, **dadurch gekennzeichnet, dass** in dem Gehäuse (2) nahe dem Gehäuseboden (6) ein kombinierter Rotorlager- und Bürstenträger (27) angeordnet ist.

9. Gleichstrommotor nach Anspruch 8, **dadurch gekennzeichnet, dass** die Bürsten (25) näher an dem Gehäuseboden (6) angeordnet sind als ein in dem kombinierten Rotorlager- und Bürstenträger (27) angeordnetes Rotorlager (29).

10. Gleichstrommotor nach Anspruch 8 oder Anspruch 9, **dadurch gekennzeichnet, dass** an dem Rotorlager- und Bürstenträger (27) weiterhin mindestens ein Schleifkontakt (35) angeordnet ist.

11. Gleichstrommotor nach einem der Ansprüche 1 bis 10, **dadurch gekennzeichnet, dass** in axialer Richtung zwischen einem Schleifringträger (14) und den Erregerwicklungen (10) ein Schleifkontaktträger (36) mit mindestens einem Schleifkontakt (35) angeordnet ist.

12. Gleichstrommotor nach einem der Ansprüche 1 bis 11, **dadurch gekennzeichnet, dass** das Gehäuse (2) durch einen Gehäusedeckel (7), in welchem ein Rotorlager (32) aufgenommen ist, geschlossen ist.

13. Gleichstrommotor nach Anspruch 12, **dadurch gekennzeichnet, dass** an dem Gehäusedeckel (7) Anschlüsse (38) für die Versorgungsspannung angebracht sind.

14. Gleichstrommotor nach einem der Ansprüche 1 bis 13, **dadurch gekennzeichnet, dass** die Abfolge von Permanentmagneten gebildet ist durch eine Abfolge von mittels Magnetisierung an einem Plasto- oder Ferritmagnet-Ringelement (13)erzeugten Polarisierungen.

15. Gleichstrommotor nach Anspruch 14, **dadurch gekennzeichnet, dass** das Plasto- oder Ferritmagnet-Ringelement (13) einen mit einer Rotorwelle (11) lagefest verbundenen Kern (12) aus weichmagnetischem Material umgibt.

## Claims

1. A direct current motor with mechanical commutation, comprising a stator (3) and a rotor (4) rotatably mounted relative thereto about an axis (X), wherein the rotor comprises a sequence of permanent magnets and the stator comprises a plurality of excitation windings arranged opposite the permanent magnets (10), wherein further a commutator (24) coupled to the rotor is provided, the commutator segments (22) of which are conductively connected via a number of slip ring units (39) to the excitation windings (10), wherein at least one of the slip rings (16) of the (slip ring units (39) comprises an essentially planar sliding contact running surface (17) on a dis-shaped portion (15) of a rotating slip ring carrier (14),
**characterised in**
**that** the commutator (24) is realised as a hollow commutator, on which the brushes (25) are arranged inside the space enclosed by the brush contact surface (26), and in that the slip rings (16) of the slip ring units (39) are arranged on different sides of a disc-shaped portion (15) of a rotating slip ring carrier (14).

2. The direct current motor according to claim 1, **characterised in that** one of the slip rings (16) of the slip ring units (39) overlaps the brush contact surface (26) in radial direction.

3. The direct current motor according to claim 1 or claim 2, **characterised in that** the slip rings (16) arranged on different sides (18, 19) of the slip ring carrier (14) at least partially overlap one another in radial direction.

4. The direct current motor according to one of claims 1 to 3, **characterised in that** a sleeve-shaped segment carrier (20) for the commutator segments (22) is moulded onto a slip ring carrier (14).

5. The direct current motor according to one of claims 1 to 4, **characterised in that** the motor (1) comprises a pot-shaped or box-shaped housing (2) with a housing shell (5) and a housing floor (6).

6. The direct current motor according to claim 5, **characterised in that** the housing floor (6) is moulded in one piece onto the housing shell (5).

7. The direct current motor according to claim 5 or claim 6, **characterised in that** the housing floor (6) is completely closed.

8. The direct current motor according to one of claims 5 to 7, **characterised in that** a combined rotor bearing and brush carrier (27) is arranged in the housing (2) close to the housing floor (6).

9. The direct current motor according to claim 8, **characterised in that** the brushes (25) are arranged closer to the housing floor (6) than a rotor bearing (29) arranged in the combined rotor bearing and brush carrier (27).

10. The direct current motor according to claim 8 or claim 9, **characterised in that** further at least one sliding contact (35) is arranged on the rotor bearing and brush carrier (27).

11. The direct current motor according to one of claims 1 to 10, **characterised in that** a sliding contact carrier (36) with at least one sliding contact (35) is arranged in axial direction between a slip ring carrier (14) and the excitation windings (10).

12. The direct current motor according to one of claims 1 to 11, **characterised in that** the housing (2) is closed by a housing lid (7) in which a rotor bearing (32) is received.

13. The direct current motor according to claim 12, **characterised in that** terminals (38) for the supply voltage are attached to the housing lid (7).

14. The direct current motor according to one of claims 1 to 13, **characterised in that** the sequence of permanent magnets is formed by a sequence of polarisations generated by means of magnetisation on a plasto- or ferrite magnet ring element (13).

15. The direct current motor according to claim 14, **characterised in that** the plasto- or ferrite-magnet ring element (13) surrounds a core (12) of magnetically soft material, which is immovably connected to the rotor shaft (11).

## Revendications

1. Moteur à courant continu avec commutation mécanique, comprenant un stator (3) et un rotor (4) positionné rotativement par rapport à celui-ci autour d'un axe (X), dans lequel le rotor comprend une séquence d'aimants permanents et le stator présente une pluralité d'enroulements excitateurs (10) disposés en vis-à-vis des aimants permanents, dans lequel en outre un commutateur couplé au rotor (24) est prévu, dont les segments de commutateur (22) sont reliés par l'intermédiaire de plusieurs unités de bagues collectrices (39) de manière conductrice avec les enroulements excitateurs (10), dans lequel au moins une des bagues collectrices (16) des unités de bagues collectrices (39) présente une surface de roulement à contact glissant (17) sur une section en forme de disque (15) d'un support de bague collectrice rotatif (14),
**caractérisé en ce**
**que** le commutateur (24) est configuré comme un commutateur creux, dans lequel les balais (25) sont disposés à l'intérieur de l'espace entouré par la surface de roulement de balai (26) et **en ce que** les bagues collectrices (16) des unités de bagues collectrices (39) sont disposées sur des côtés différents d'une section en forme de disque (15) d'un support de bague collectrice rotatif (14).

2. Moteur à courant continu selon la revendication 1, **caractérisé en ce que** une des bagues collectrices (16) des unités de bagues collectrices (39) se superpose dans la direction radiale à la surface de roulement de balai (26).

3. Moteur à courant continu selon la revendication 1 ou 2, **caractérisé en ce que** les bagues collectrices (16) disposées sur les différents côtés (18, 19) du support de bagues collectrices (14) se superposent au moins partiellement l'une l'autre dans la direction radiale.

4. Moteur à courant continu selon une des revendications 1 à 3, **caractérisée en ce qu'**un support de segment en forme de douille (20) est façonné pour les segments de commutateur (22) sur un support de bague collectrice (14) .

5. Moteur à courant continu selon une des revendications 1 à 4, **caractérisé en ce que** le moteur (1) présente un logement (2) en forme de chaudron ou de manchon avec une gaine (5) de logement et une base de logement (6).

6. Moteur à courant continu selon la revendication 5, **caractérisé en ce que** la base de logement (6) est façonné en un seul tenant sur la gaine de logement (5) .

7. Moteur à courant continu selon la revendication 5 ou 6, **caractérisé en ce que** la base de logement (6) est fermée en totalité.

8. Moteur à courant continu selon une des revendications 5 à 7, **caractérisée en ce que** dans le logement (2) à proximité de la base du logement (6) est disposé un support mixte de palier de rotor et de balai (27).

9. Moteur à courant continu selon la revendication 8, **caractérisé en ce que** les balais (25) sont disposés plus près de la base du logement (6) qu'un palier de rotor (29) disposé dans le support mixte de palier de rotor et de balai (27).

10. Moteur à courant continu selon la revendication 8 ou 9, **caractérisé en ce que** sur le support de palier de rotor et de balai (27) est en outre disposé au moins un contact glissant (35).

11. Moteur à courant continu selon une des revendications 1 à 10, **caractérisé en ce que** dans la direction axiale entre un support de bague collectrice (14) et les enroulements excitateurs (10) un support de contact glissant (36) comportant au moins un contact glissant (35) est disposé.

12. Moteur à courant continu selon une des revendications 1 à 11, **caractérisé en ce que** le logement (2) est fermé par un couvercle de logement (7), dans lequel un palier de rotor (32) est renfermé.

13. Moteur à courant continu selon la revendication 12, **caractérisé en ce que** sur le couvercle de logement (7) sont montés des raccords (38) pour la tension d'alimentation.

14. Moteur à courant continu selon une des revendications 1 à 13, **caractérisé en ce que** la séquence d'aimants permanents est formée par une séquence de polarisation générée au moyen de la magnétisation (13) sur un élément annulaire d'aimant de ferrite ou plastoferrite.

15. Moteur à courant continu selon la revendication 14, **caractérisé en ce que** l' élément annulaire d'aimant de ferrite ou plastoferrite (13) entourant un noyau (12) en matériau magnétique tendre relié de manière fixe avec un arbre de rotor (11).
